# EUROPÄISCHE PATENTANMELDUNG

(11) **EP 1 909 364 A2**
(43) Veröffentlichungstag der Anmeldung: **09.04.2008**
(21) Anmeldenummer: 07008990.9
(22) Anmeldetag: 04.05.2007
(51) Int. Cl.: H01R 27/02, H02G 3/12, H01R 25/00

(54) **Vorrichtung zur Installation von Datenanschlussmodulen**

(30) Priorität: 12.09.2006 DE 102006042692
(71) Anmelder: Wilhelm Rutenbeck Gmbh & Co. KG, 58579 Schalksmühle (DE)
(72) Erfinder: Riccardi, Oliver, 58579 Schalksmühle (DE)
(74) Vertreter: Köchling, Conrad-Joachim

(57) **Zusammenfassung**

Die Erfindung beschreibt eine Vorrichtung zur Installation von Datenanschlussmodulen (1) bestehend aus einem an einer Installationsdose befestigbaren Halter (3) mit einer zentralen Ausnehmung (4) zur Aufnahme von mindestens einem Datenanschlussmodul (1), einem Zentralstück (5) mit einer zentralen Öffnung, die mindestens den Steckbereich der Datenanschlussmodule (1) freigibt, sowie einer Abdeckplatte (6) mit einem zentralen Ausschnitt, der den Steckbereich der Datenanschlussmodule (1) und Teilbereiche des Halters (3) freigibt, wobei die Abdeckplatte (6) in Montagesolllage zwischen dem Halter (3) und dem Zentralstück (5) angeordnet und mittels des Zentralstücks (5) an dem Halter (3) lösbar fixiert ist, wobei die zentrale rechteckige Ausnehmung (4) des Halters (3) so dimensioniert ist, dass maximal drei im Querschnitt rechteckige Datenanschlussmodule (1) in der Ausnehmung (4) positionierbar sind, dass in die Ausnehmung (4) des Halters (3) ein Adapter (8,8') einsetzbar ist, der alternativ Aufnahmebereiche für zwei oder drei Datenanschlussmodule (1) aufweist, dass alternativ bei Anordnung eines Duoadapters (8) mit Aufnahmebereichen für zwei Datenanschlussmodule (1) eine herkömmliche Abdeckplatte (6) mit einer kreisrunden Ausnehmung sowie ein herkömmliches Zentralstück (5) mit einem den Steckbereichen der Datenanschlussmodule (1) angepassten Ausschnitt vorgesehen ist, oder bei Anordnung eines Trioadapters (8') mit Aufnahmebereichen für drei Datenanschlussmodule (1) ein Zentralstück (5') mit einer rechteckigen Ausnehmung, die die drei Aufnahmebereiche freigibt sowie eine Abdeckplatte (6') mit einem diesem Zentralstück (5') angepassten Ausschnitt vorgesehen ist.

## Beschreibung

Die Erfindung betrifft eine Vorrichtung zur Installation von Datenanschlussmodulen, insbesondere Steckbuchsen, bestehend aus einem an einer Installationsdose, insbesondere Unterputzdose, befestigbaren Halter mit einer zentralen Ausnehmung zur Aufnahme von mindestens einem Datenanschlussmodul, einem Zentralstück mit einer zentralen Öffnung, die mindestens den Steckbereich der Datenanschlussmodule freigibt, sowie einer Abdeckplatte mit einem zentralen Ausschnitt, der den Steckbereich der Datenanschlussmodule und Teilbereiche des Halters freigibt, wobei die Abdeckplatte in Montagesolllage zwischen dem Halter und dem Zentralstück angeordnet und mittels des Zentralstücks an dem Halter lösbar fixiert ist.

Eine ähnliche Vorrichtung ist aus der DE 198 32 742 A1 bekannt. Eine weitere ähnliche Vorrichtung ist aus der DE 101 21 424 C2 bekannt, wobei dort übliche TAE- Buchsen und Datenanschlussmodule in Form von digitalen Steckbuchsen vorgesehen sind.

Gemäß nächstliegendem Stand der Technik sind Vorrichtungen gattungsgemäßer Art bekannt, bei denen der Aufbau wie folgt ist. Es ist ein Tragring als Halter vorgesehen, der beispielsweise TAE- Buchsen haltert und dazu bestimmt ist, auf die Mündung einer Unterputzdose aufgesetzt zu werden und mit dieser verbunden zu werden wobei der Tragring beispielsweise mittels Spreizkrallen in einer Einbauöffnung festgelegt werden kann. Zur Abdeckung des Halters, insbesondere des Tragringes, ist eine Abdeckplatte vorgesehen, die im Stand der Technik üblicherweise einen zentralen Ausschnitt mit einem 45mm Durchmesser aufweist. Diese Abdeckplatte wird auf den montierten Halter, insbesondere den Tragring, aufgesetzt und anschließend wird ein Zentralstück mit einer zentralen Öffnung aufgesetzt und beispielsweise mittels einer Schraube mit dem Tragring, also dem Halter verbunden, wobei das Zentralstück eine Öffnung aufweist, die dem Steckbereich der TAE-Buchsen entspricht. Sofern bei einem solchen herkömmlichen Aufbau anstelle der TAE- Buchsen Datenanschlussmodule angeordnet werden sollen, so werden bisher solche Datenanschlussmodule direkt in einer Ausnehmung des Halters also der Tragplatte, befestigt. Dabei ist die Tragplatte mit einem Ausschnitt versehen, der so groß bemessen ist, dass drei solcher Datenanschlussmodule nebeneinander montiert werden können. Bei einer solchen Anordnung ist die Folge, dass der Hersteller, der entsprechende Zentralstücke und Abdeckplatten für TAE- Buchsen zur Verfügung hält, ein neues Zentralstück und eine neue Abdeckplatte herstellen und zur Verfügung stellen muss, damit die entsprechenden Datenanschlussmodule samt Halter von einer entsprechenden Abdeckplatte abgedeckt werden können und das Zentralstück den Mittelbereich der Abdeckplatte verschließt, mit Ausnahme der Zugangsöffnung zu den Datenanschlussmodulen, die in Form von Steckbuchsen beispielsweise ausgebildet sind.

Ausgehend von diesem Stand der Technik liegt der Erfindung die Aufgabe zugrunde, eine Vorrichtung gattungsgemäßer Art zur Verfügung zu stellen, die es ermöglicht, unter Beibehalt der bisherigen Abdeckplatten und Zentralstücke zwei Datenanschlussmodule an dem Halter zu fixieren und mittels des üblichen Zentralstückes und der üblichen Abdeckplatte zu überdecken, wobei lediglich die Einstecköffnungen der buchsenartigen Datenanschlussmodule freigegeben sind. Alternativ soll es möglich sein, am Halter auch drei solcher Datenanschlussmodule nebeneinander zu montieren, wobei dann für eine solche Lösung ein neues Zentralstück mit einer entsprechenden Ausnehmung zur Verfügung gestellt werden muss und ebenso eine entsprechende Abdeckplatte.

Zur Lösung dieser Aufgabe schlägt die Erfindung vor, dass die zentrale Ausnehmung des Halters als rechteckige Ausnehmung ausgebildet und so dimensioniert ist, dass maximal drei im Querschnitt rechteckige Datenanschlussmodule in der Ausnehmung positionierbar sind, dass in die Ausnehmung des Halters ein Adapter eingesetzt oder einsetzbar ist, der ebenso wie der Halter Kupplungsmittel zur lösbaren Kupplung des Adapters am Halter aufweist, der alternativ als Duoadapter zwei Aufnahmebereiche für zwei Datenanschlussmodule aufweist, die zentrisch und mittensymmetrisch zur Ausnehmung des Halters ausgerichtet sind, oder als Trioadapter drei Aufnahmebereiche für drei Datenanschlussmodule aufweist, die zentrisch und mittensymmetrisch zur Ausnehmung des Halters ausgerichtet sind, dass alternativ bei Anordnung eines Duoadapters mit Aufnahmebereichen für zwei Datenanschlussmodule eine herkömmliche Abdeckplatte mit einer kreisrunden Ausnehmung mit einem Durchmesser von etwa 45mm oder einer entsprechend bemessenen rechteckigen Ausnehmung sowie ein herkömmliches Zentralstück mit einem den Steckbereichen der Datenanschlussmodule angepassten Ausschnitt vorgesehen ist, oder bei Anordnung eines Trioadapters mit Aufnahmebereichen für drei Datenanschlussmodule ein Zentralstück mit einer rechteckigen Ausnehmung, die die drei Aufnahmebereiche freigibt sowie eine Abdeckplatte mit einem diesem Zentralstück angepassten Ausschnitt vorgesehen ist.

Hierbei nimmt der Halter, der nach Art eines üblichen Tragringes ausgebildet ist, alternativ einen Duoadapter oder einen Trioadapter auf. Der Adapter ist wahlweise in die Ausnehmung des Halters einsetzbar und mit diesem in geeigneter Weise, beispielsweise durch Rastmittel, lösbar befestigt. Bei Anordnung eines entsprechenden Duoadapters weist dieser zwei Aufnahmebereiche für zwei Datenanschlussmodule auf, die zentrisch und mittensymmetrisch zur Ausnehmung des Halters ausgerichtet sind. In diesem Falle können zwei Datenanschlussmodule in den Adapter montiert werden. Anschließend kann die herkömmliche Abdeckplatte aufgelegt werden und das herkömmliche Zentralstück montiert werden, wobei nach deren Montage lediglich die beiden Stecköffnungen der beiden Datenanschlussmodule zugänglich sind.

Bei Anordnung eines Trioadapters in der Ausnehmung des Halters können in diesen Trioadapter drei Datenanschlussmodule eingesetzt und gehalten werden, die wiederum zentrisch und mittensymmetrisch zur Ausnehmung des Halters ausgerichtet sind. In diesem Falle kann unter Umständen eine herkömmliche Abdeckplatte eingesetzt werden, wobei aber ein anderes Zentralstück, welches der Dreifachanordnung von Datenanschlussmodulen angepasst ist, verwendet werden. Es ist auch möglich, dass auch die Abdeckplatte einen anderen Ausschnitt haben muss, so dass sowohl eine alternative Abdeckplatte als auch ein alternatives Zentralstück zu bevorraten und zu montieren sind, um eine Abdeckung für die gesamte Baueinheit zu bilden, die lediglich die drei Stecköffnungen für die nebeneinander angeordneten drei Datenanschlussmodule freilässt.

Der Halter ist nach Art einer üblichen Tragplatte oder eines tragringähnlichen Elementes ausgebildet und besteht vorzugsweise aus Metall, insbesondere Zinkdruckguss. Er dient zur Befestigung der Einheit an beispielsweise einer Unterputzdose und zur Aufnahme der Datenanschlussmodule. Der Adapter sowie die Abdeckung und das Zentralstück sind vorzugsweise aus Kunststoff gefertigt. Die Datenanschlussmodule sind vorzugsweise ebenfalls Zinkdruckgussteile mit in der Stecköffnung vorgesehenen federnden Anschlusskontakten. Es ist somit möglich, die erfindungsgemäße Vorrichtung einerseits in Kombination mit üblichen Zentralstücken und Abdeckplatten zu verwenden, sofern eine Zweifachanordnung von Datenanschlussmodulen und die Anordnung des Duoadapters vorgesehen sind. Sofern der Trioadapter mit drei Aufnahmen für drei Datenanschlussmodule vorgesehen wird, muss ein neues Zentralstück beigestellt werden und gegebenenfalls eine neue Abdeckplatte. Die erfindungsgemäße Lösung ermöglicht es dem Anwender, bisherige vorhandene Abdeckplatten und Zentralstücke weiter zu verwenden, sofern lediglich zwei Datenanschlussmodule montiert werden sollen.

Um eine exakte Positionierung alternativ des Duoadapters oder des Trioadapters in dem Halter zu erreichen, ist vorgesehen, dass die rechteckige Ausnehmung des Halters an beiden langen Längsrandkanten jeweils gegenüberliegend sieben Führungsrinnen aufweist, der Duoadapter drei die Aufnahmebereiche seitlich begrenzende Führungswände aufweist, die in drei ersten Führungsrinnen des Halters geführt sind, der Trioadapter vier die Aufnahmebereiche seitlich begrenzende Führungswände aufweist, die vier zweiten Führungsrinnen des Halters geführt sind.

Drei der sieben Führungsrinnen dienen dazu, Führungen für die Führungswände des Duoadapters zur Verfügung zu stellen, so dass dieser lagerichtig und stabil in dem Halter zu montieren ist. Vier andere der sieben Führungsrinnen dienen zur exakten Positionierung und Führung des Trioadapters, der mit seinen vier Führungswänden in die Führungsrinnen des Halters einschiebbar und damit bei der Montage geführt und nachfolgend positioniert gehalten ist. Durch die entsprechende Anordnung und Ausbildung ist sichergestellt, dass sowohl der Duoadapter als auch der Trioadapter symmetrisch und mittig in dem Halter beziehungsweise in dessen Ausnehmung aufgenommen ist.

Um die Führung und Positionierung noch zu verbessern ist vorgesehen, dass an eine der Längsrandkanten der Ausnehmung des Halters eine über dessen Rückseite vorragende Stützfläche anschließt, die die Führungsrinnen aufweist.

Des Weiteren ist zur Verbesserung der Positionierung vorgesehen, dass an die schmalen Randkanten der Ausnehmung des Halters über die Rückseite des Halters vorragende Stützflächen anschließen.

Der Duoadapter weist zudem neben den beiden äußeren Führungswänden noch ein im Bereich der Ausnehmung des Halters befindliches Verlängerungselement auf, welches die Öffnung der Ausnehmung bei eingesetztem Duoadapter vollständig überdeckt. Diese Verlängerungselemente sind in der Montagesollposition zwischen den Stützflächen angeordnet und stützen sich an diesen ab.

Bei der Anordnung des Trioadapters stützen sich dessen äußere Führungswände an den Stützflächen des Halters ab.

Um den Duoadapter oder alternativ den Trioadapter in dem Halter verrasten und fixieren zu können, ist vorgesehen, dass der Halter benachbart zu einer Längsrandkante der Ausnehmung zwei Rastausnehmungen aufweist und eine der anderen Längsrandkante benachbarte Kante des Halters eine Rastkante bildet, und dass der Duoadapter und der Trioadapter jeweils zwei Rastnasen aufweist, die in die beiden Rastausnehmungen einsetzbar und dort verrastbar sind, sowie jeweils eine Raste, die mit der Rastkante verrastbar ist.

Sowohl der Duoadapter als auch der Trioadapter weisen an solcher Position entsprechende Rastnasen und Raste auf, die bei Anordnung in dem Halter an identischer Position befindlich sind, so dass der Halter nur zwei Rastausnehmungen und eine Rastkante aufweist, die sowohl für die Verrastung des Duoadapters als auch für die Verrastung des Trioadapters bestimmt sind.

Zudem kann vorgesehen sein, dass die frontseitige Mündung der Aufnahmebereiche jedes Adapters durch eine abbrechbare Blindkappe oder Blindwand verschlossen ist.

In diesem Zusammenhang wird darauf hingewiesen, dass die Vorderseite oder die Frontseite die Seite ist, die bei der Montagesolllage für den Benutzer frei zugänglich ist, während die Rückseite die Seite definiert, die der Unterputzdose oder dergleichen Teil zugewandt ist, an der der Halter befestigt ist und in die die entsprechenden Teile montiert werden.

Zudem kann vorgesehen sein, dass die Vorderseite des Duoadapters eine der Form der kreisrunden Ausnehmung der Abdeckplatte angepasste aus der Vorderseite vorragende Wandung aufweist, deren Dicke etwa der Dicke der Abdeckplatte entspricht.

Auf diese Weise ist es möglich, eine Abdeckplatte mit entsprechender kreisrunder Ausnehmung mit einem Durchmesser von 45mm auf den Halter samt Duoadapter aufzusetzen, wobei die Vorderseite des Duoadapters weitestgehend der Form der kreisrunden Ausnehmung der Abdeckplatte angepasst ist.

Zudem kann zur erleichterten Montage der Datenanschlussmodule vorgesehen sein, dass jeder Adapter an einer Längsrandkante seiner Aufnahmebereiche eine nach vorn vorragende, abgeschrägte Führungswand für die einzuschiebenden Datenanschlussmodule aufweist.

Besonders bevorzugt ist zudem vorgesehen, dass jedes Datenanschlussmodul hinter der Randkante der Ausnehmung des Halters verhakbare Hakenelemente und verrastbare federnde Rastelemente aufweist.

Auf diese Weise wird bei der Verhakung der Datenanschlussmodule eine metallische Verbindung zwischen dem Gehäusekörper der Datenanschlussmodule und dem metallischen Halter erreicht, so dass hierdurch eine elektrische Masseverbindung erzeugt ist.

Ein Ausführungsbeispiel der Erfindung ist in der Zeichnung dargestellt und im Folgenden näher beschrieben.

Es zeigt:

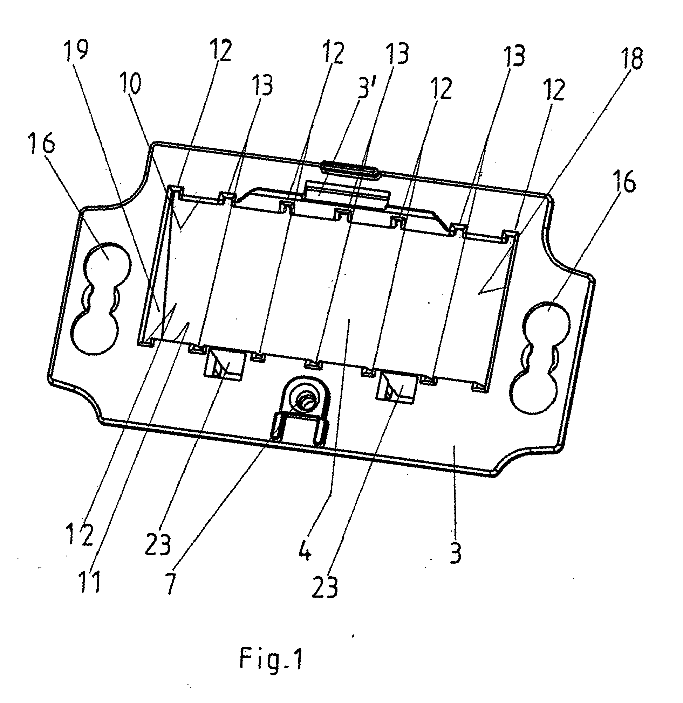

- Figur 1: einen erfindungsgemäßen Halter in Vorderansicht;

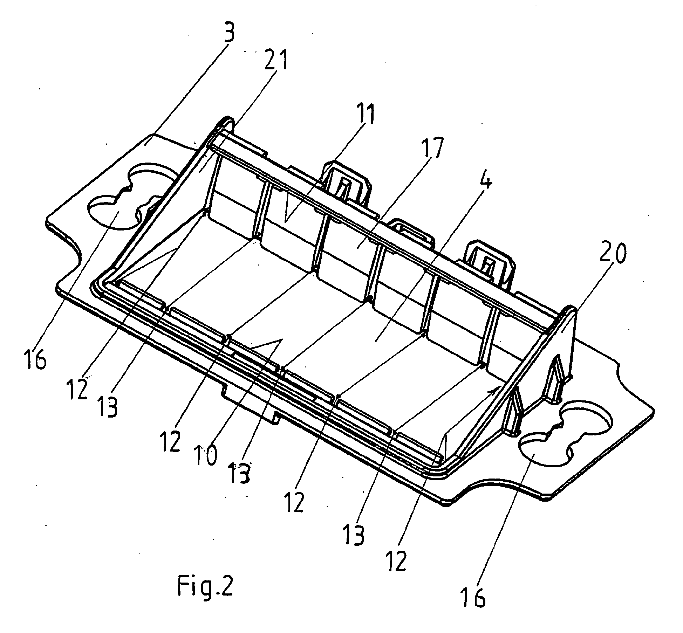

- Figur 2: desgleichen von hinten gesehen;

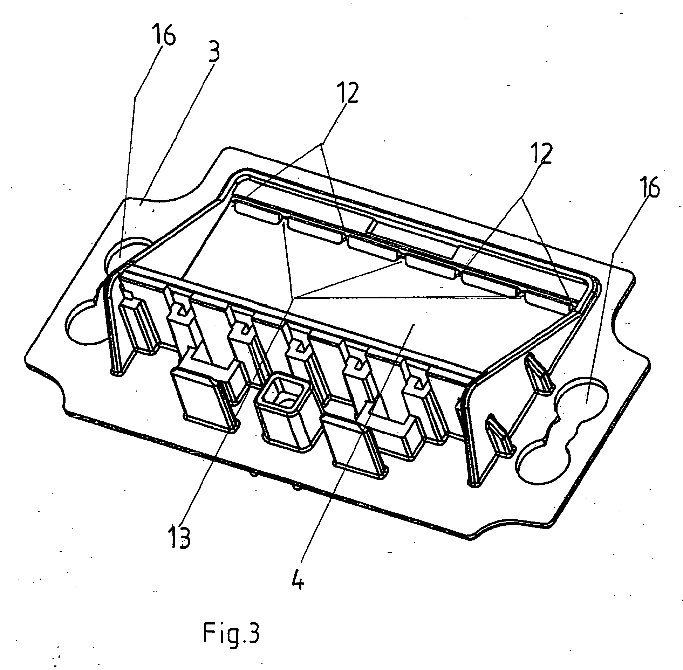

- Figur 3: den Halter ebenfalls von hinten gesehen in einer anderen Schräglage;
- Figur 4: einen Duoadapter in Vorderansicht;
- Figur 5: desgleichen von hinten gesehen;
- Figur 6: den Halter mit montiertem Duoadapter mit einem eingesetzten Datenanschlussmodul in Vorderansicht;
- Figur 7: desgleichen mit montierter Abdeckplatte in Vorderansicht;
- Figur 8: desgleichen mit montiertem Zentralstück in Vorderansicht;
- Figur 9: den Halter mit montiertem Duoadapter von hinten gesehen;

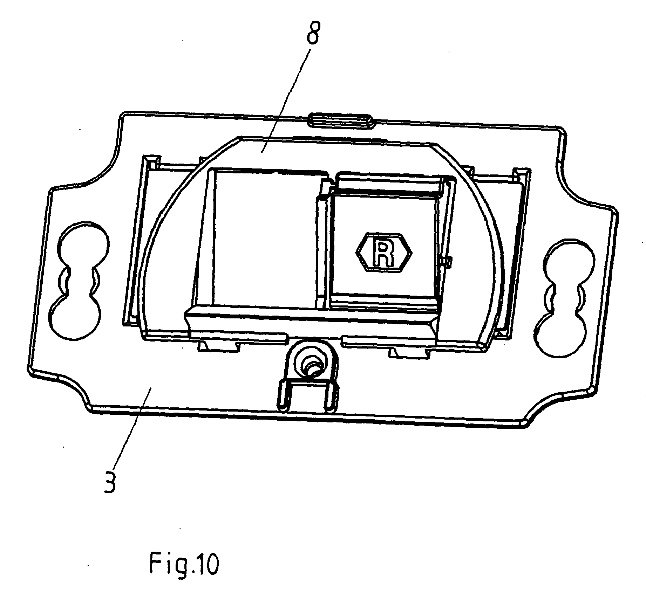

- Figur 10: den Halter mit montiertem Duoadapter in Vorderansicht ähnlich der Darstellung in Figur 6 gesehen;

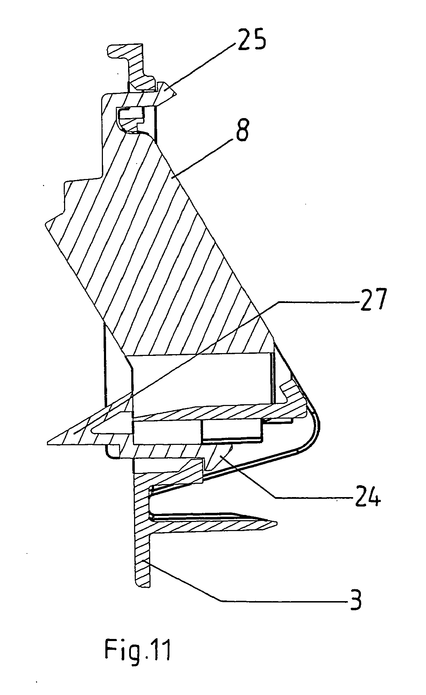

- Figur 11: den Halter mit montiertem Adapter im Schnitt gesehen;
- Figur 12: den Halter mit montiertem Adapter und montiertem Datenanschlussmodul im Schnitt gesehen;

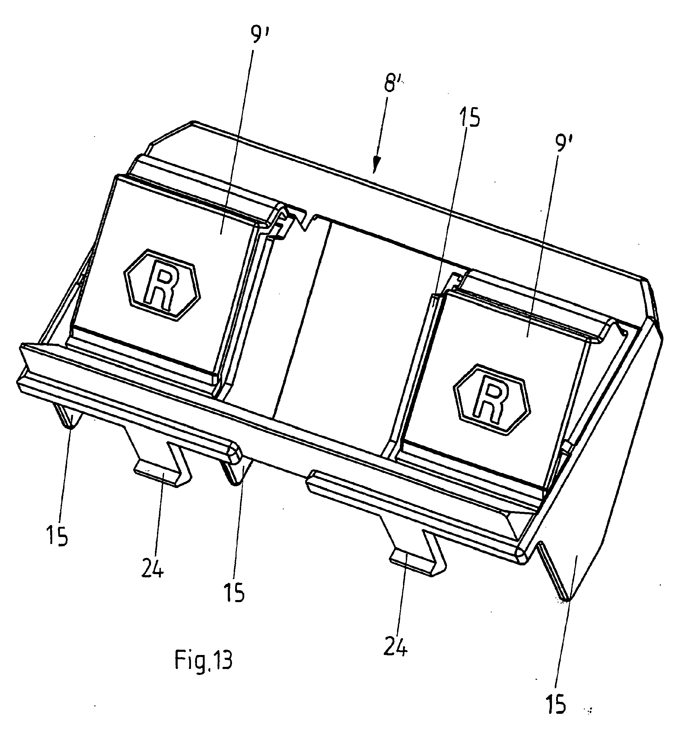

- Figur 13: einen Trioadapter von vorn gesehen;

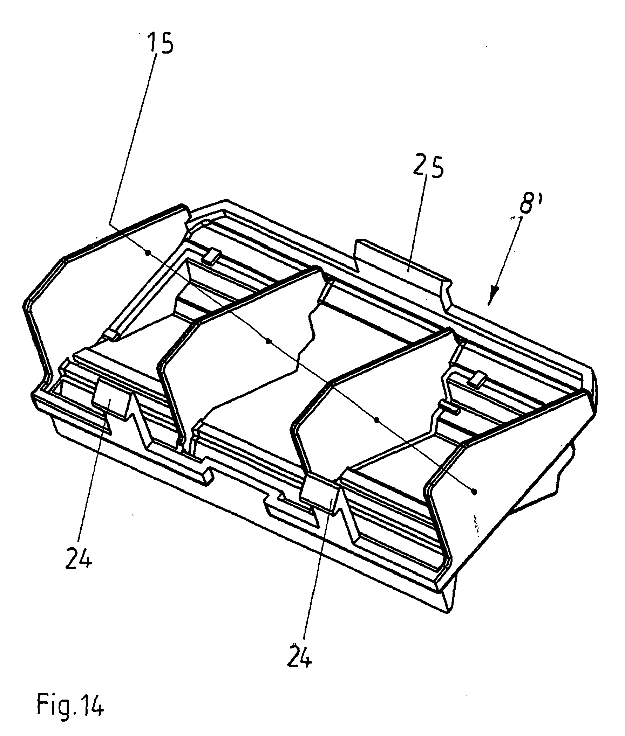

- Figur 14: den Trioadapter von hinten gesehen;

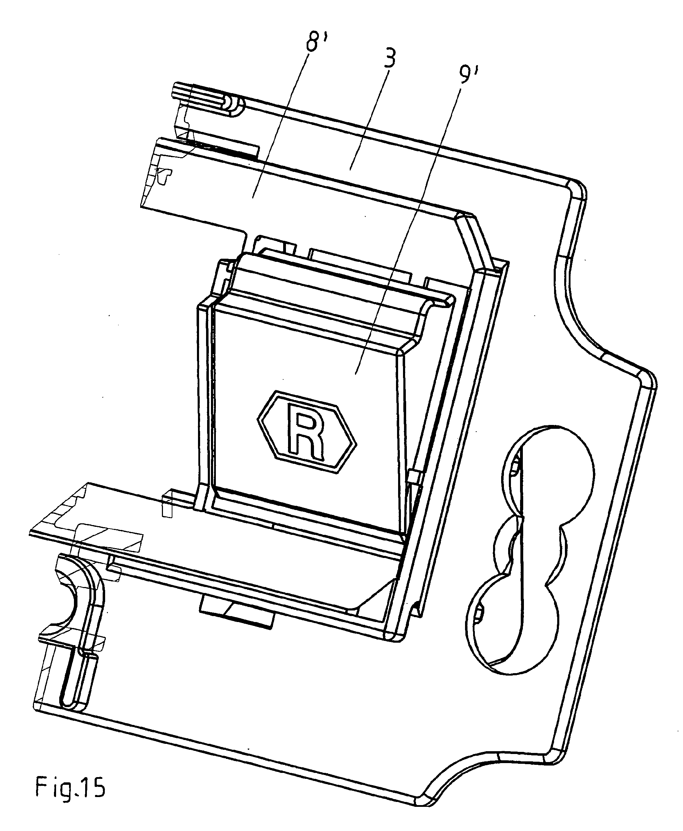

- Figur 15: einen Ausschnitt eines Halters mit eingesetztem Trioadapter in Vorderansicht;
- Figur 16: den Halter mit eingesetztem Trioadapter von hinten gesehen;

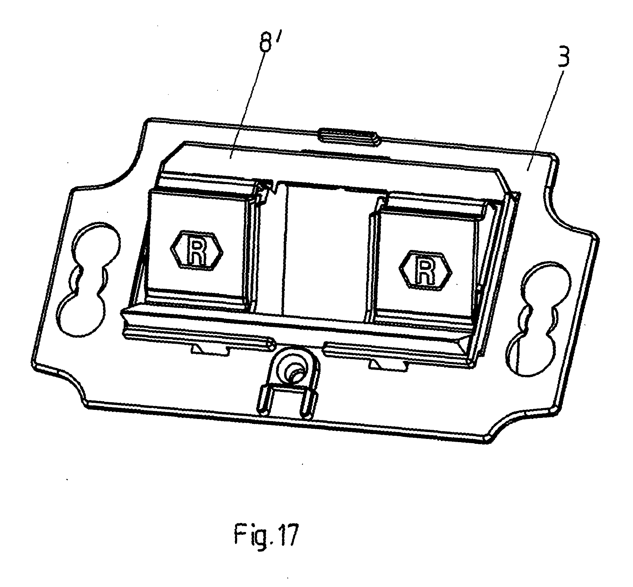

- Figur 17: den Halter mit eingesetztem Trioadapter in Vorderansicht;

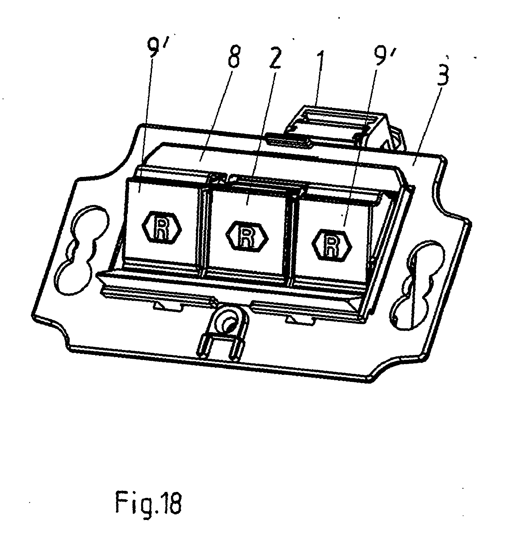

- Figur 18: den Halter mit eingesetztem Trioadapter und einem eingesetzten Datenanschlussmodul in Vorderansicht;

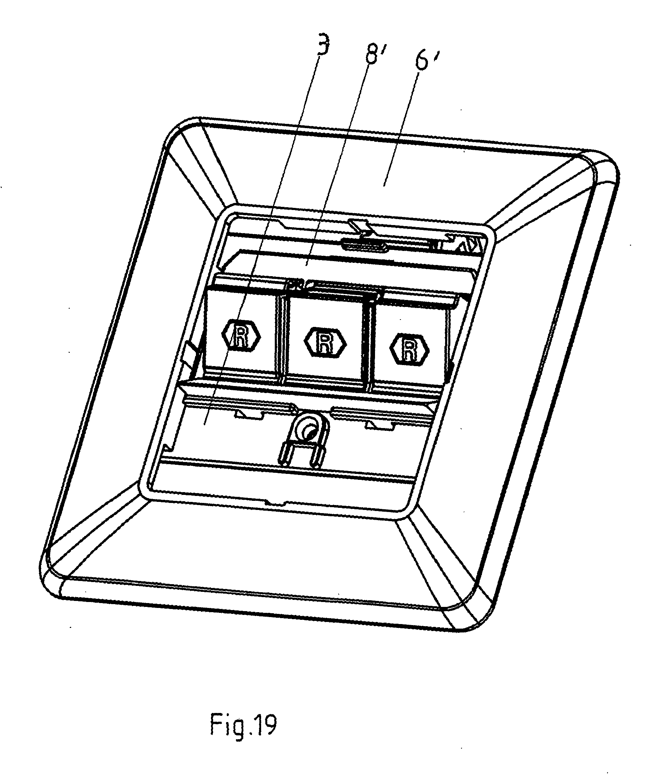

- Figur 19: den Halter mit Trioadapter und aufgesetzter Abdeckplatte in Vorderansicht;

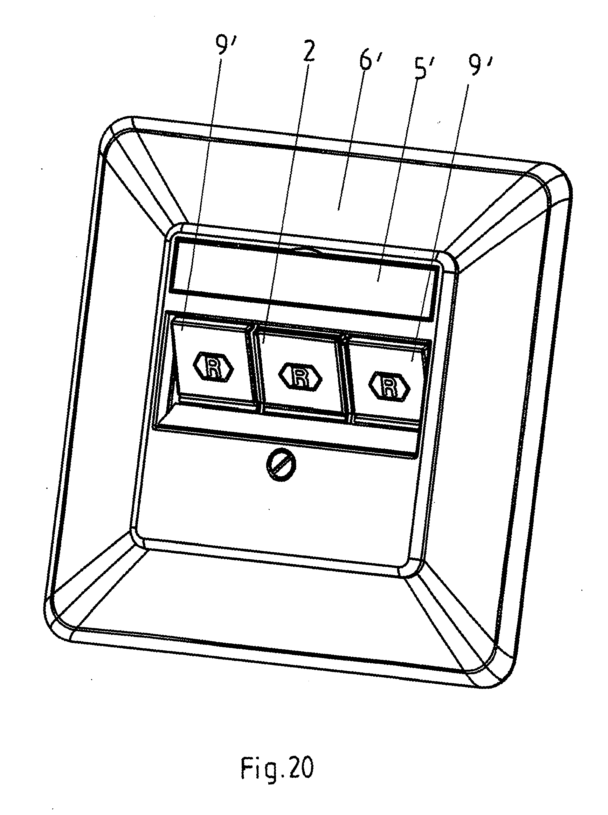

- Figur 20: den Halter mit Trioadapter, aufgesetzter Abdeckplatte und aufgebrachtem Zentralstück in Vorderansicht.

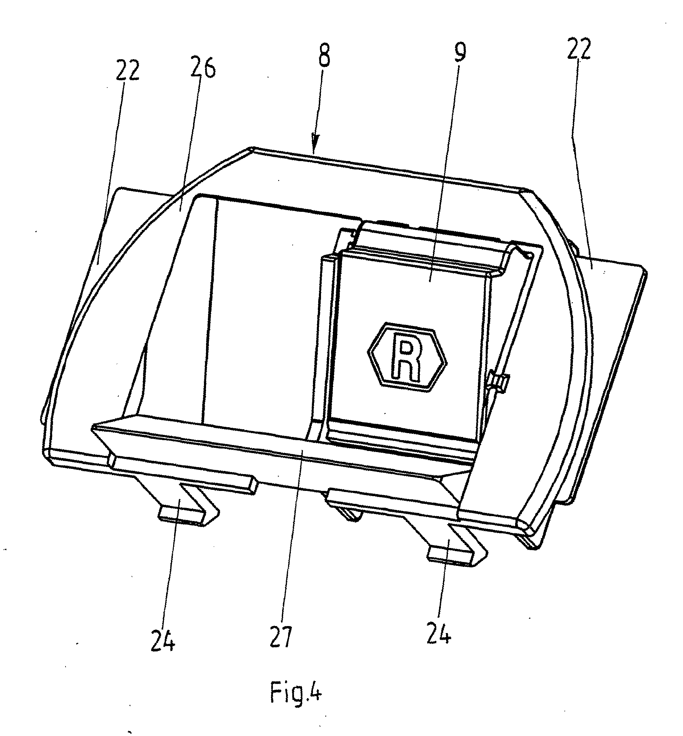

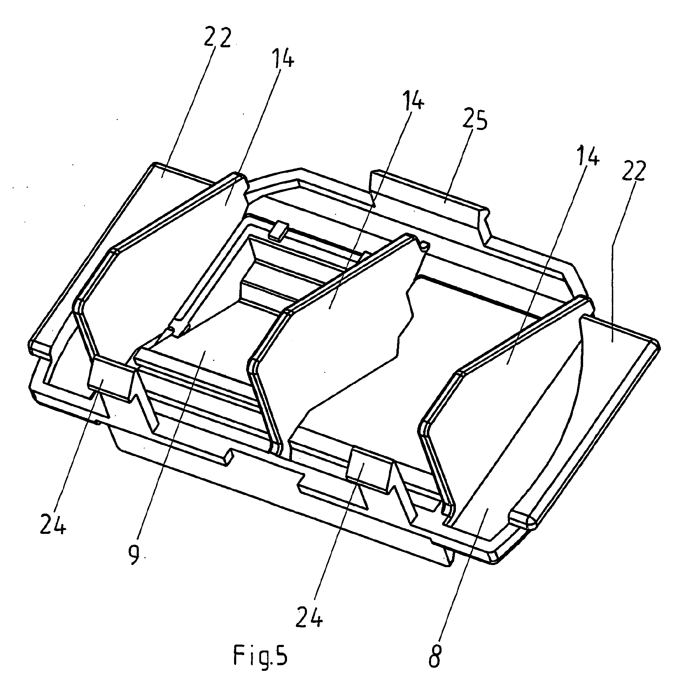

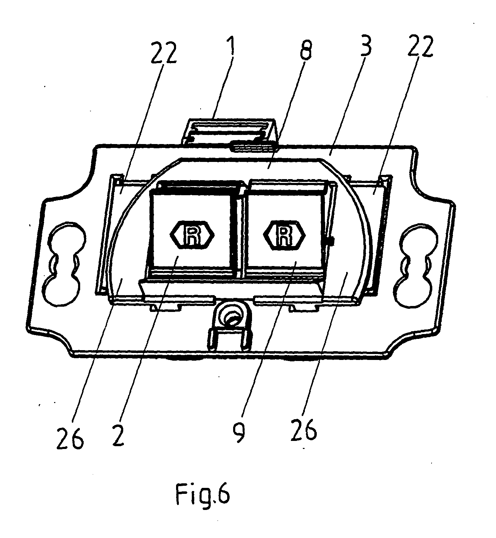

In den Zeichnungen ist eine Vorrichtung zur Installation von Datenanschlussmodulen 1, insbesondere Steckbuchsen gezeigt, wobei das Datenanschlussmodul 1 an seiner Stecköffnung eine Staubklappe 2 aufweist. Die Vorrichtung besteht im Wesentlichen aus einem an einer Installationsdose (nicht gezeigt), insbesondere Unterputzdose, befestigbaren Halter 3 mit einer zentralen Ausnehmung 4 zur Aufnahme von mindestens einem Datenanschlussmodul 1, einem Zentralstück 5 beziehungsweise 5' mit einer zentralen Öffnung, die einen Steckbereich der Datenanschlussmodule freilässt, sowie einer Abdeckplatte 6,6' mit einem zentralen Ausschnitt, der sowohl den Steckbereich der Datenanschlussmodule 1 als auch Teilbereiche des Halters 3 freilässt. In der Montagesolllage ist die Abdeckplatte 6,6' zwischen dem Halter 3 und dem Zentralstück 5 beziehungsweise 5' angeordnet und mittels des Zentralstückes an dem Halter 3 lösbar fixiert. Hierzu weist der Halter 3 eine Gewindelochung 7 auf, in die eine Schraube 7' einschraubbar ist, mittels derer das Zentralstück am Halter 3 befestigbar ist, wobei das Zentralstück 5,5' mit seinem Rand Randbereiche der Abdeckplatte 6,6' überdeckt, so dass alle Teile damit aneinander beziehungsweise am Halter 3 fixiert sind. Die zentrale Ausnehmung 4 des Halters 3 ist als rechteckige Ausnehmung ausgebildet und so dimensioniert, dass maximal drei im Querschnitt rechteckige Datenanschlussmodule 1 in der Ausnehmung positionierbar sind. In die Ausnehmung 4 des Halters 3 ist alternativ ein Adapter 8 beziehungsweise 8' eingesetzt oder einsetzbar, der ebenso wie der Halter 3 Kupplungsmittel zur lösbaren Kupplung des Adapters 8 beziehungsweise 8' am Halter 3 aufweist. Der so genannte Duoadapter 8 weist zwei Aufnahmebereiche für zwei Datenanschlussmodule 1 auf, wie beispielsweise in Figur 4 bis 6 ersichtlich, wobei im Ausführungsbeispiel einer der Aufnahmebereiche durch eine Kappe 9 beziehungsweise beim Trioadapter 8' zwei solcher Aufnahmebereiche durch zwei Kappen 9' abgedeckt ist, beziehungsweise sind.

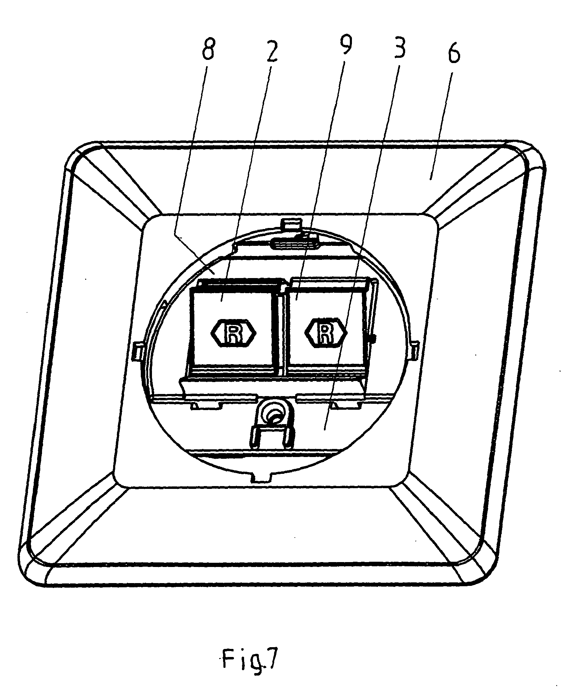

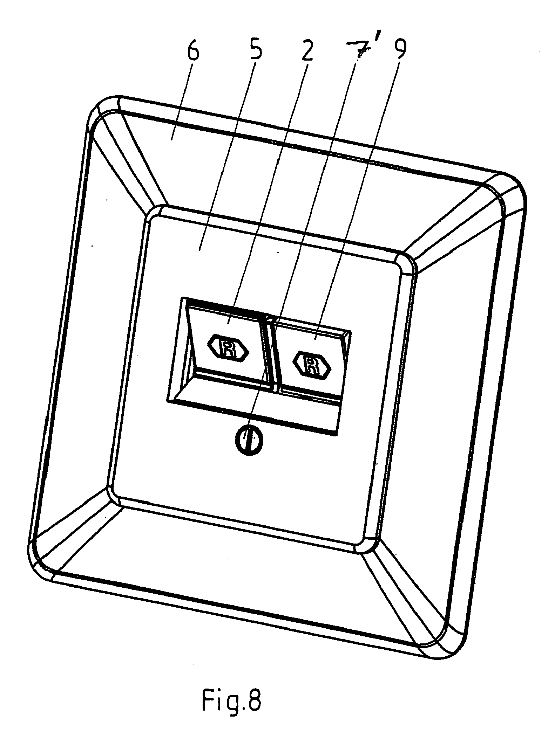

Beim Duoadapter 8 sind die beiden Aufnahmebereiche für die Datenanschlussmodule 1 zentrisch und mittensymmetrisch zur Ausnehmung des Halters 3 ausgerichtet. Bei dem Trioadapter 8' sind drei solcher Aufnahmebereiche für drei Datenanschlussmodule 1 vorgesehen, die ebenso bei montiertem Adapter zentrisch und mittensymmetrisch in der Ausnehmung 4 des Halters 3 ausgerichtet sind. Bei der Anordnung eines Duoadapters 8 mit Aufnahmebereichen für zwei Datenanschlussmodule 1 ist, wie in Figur 7 und 8 verdeutlicht, eine herkömmliche Abdeckplatte 6 mit einer kreisrunden Ausnehmung mit einem Durchmesser von etwa 45mm vorgesehen. Die Ausnehmung kann alternativ auch bei herkömmlichen Abdeckplatten 6 quadratisch ausgebildet sein. Ferner ist ein herkömmliches Zentralstück 5 vorgesehen, welches einen Ausschnitt aufweist, der dem Steckbereich der beiden Datenanschlussmodule 1 angepasst ist.

Bei der Anordnung eines Trioadapters 8' mit Aufnahmebereichen für drei Datenanschlussmodule 1 ist ein besonderes Zentralstück 5' vorgesehen, welches nicht der üblichen Ausbildung entspricht, wobei dieses Zentralstück 5' eine rechteckige Ausnehmung aufweist, die die drei Aufnahmebereiche der drei Datenanschlussmodule 1 freigibt. Ferner ist eine alternative Abdeckplatte 6' mit einem dem Zentralstück 5' angepassten Ausschnitt vorgesehen.

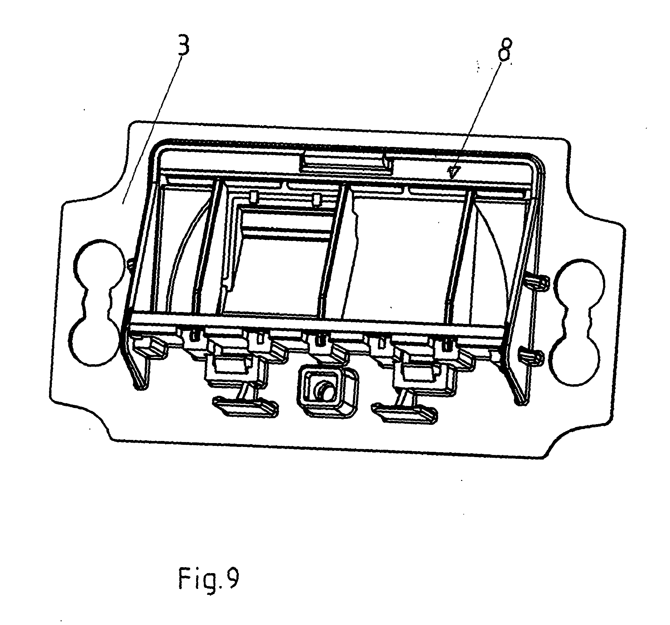

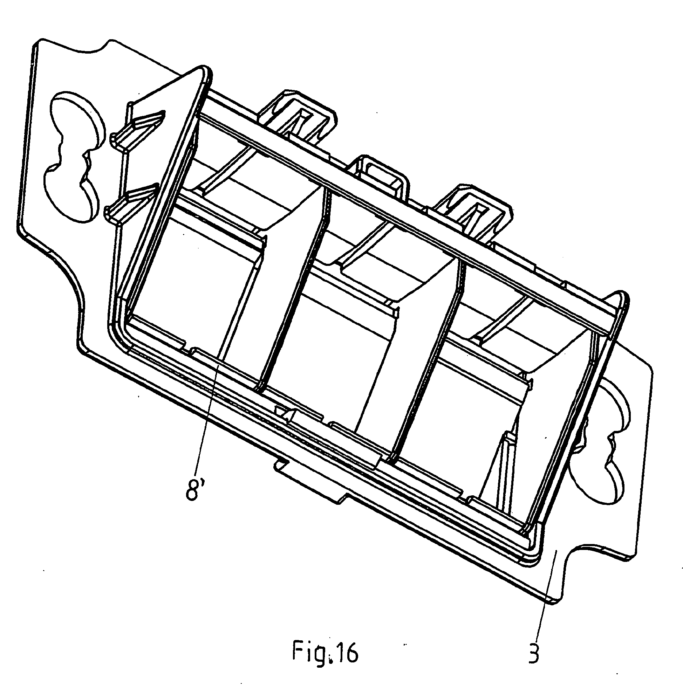

Die rechteckige Ausnehmung 4 des Halters 3 weist an beiden langen Längsrandkanten 10,11 jeweils genau gegenüberliegend sieben Führungsrinnen 12 beziehungsweise 13 auf. Der Duoadapter 8 weist drei die beiden Aufnahmebereiche für Datenanschlussmodule 1 seitlich begrenzende Führungswände 14 auf, die in Montagesollposition jeweils in drei ersten Führungsrinnen 13 des Halters 3 geführt sind. Der Trioadapter 8' weist vier die Aufnahmebereiche für jeweils ein Datenanschlussmodul 1 seitlich begrenzende Führungswände 15 auf, die in jeweils vier zweiten Führungsrinnen 12 des Halters 3 geführt sind. Der Halter 3 ist als ebenflächiges metallisches Bauteil ausgebildet, wobei die Gesamtform etwa rechteckig ausgebildet ist. In den seitlich überstehenden Randbereichen sind Befestigungslochungen 16 vorgesehen. Von der Rückseite des Halters 3 ragt eine Stützfläche 17 ab, die an die Montagesolllage untere Randkante des Ausschnittes 4 des Halters 3 anschließt, wobei die Stützfläche auf der Seite, die den einzuschiebenden Adaptern zugewandt ist, die entsprechenden Führungsrinnen 12 beziehungsweise 13 aufweist. Die Führungswände 14 beziehungsweise 15 der Adapter 8 beziehungsweise 8' sind entsprechend dimensioniert, so dass sie sich in Montagesolllage an der gesamten Führungsfläche 17 im Bereich der Rinnen 12 beziehungsweise 13 abstützen, wie beispielsweise in Figur 9 und Figur 16 ersichtlich ist. An die seitlichen schmalen Randkanten 18,19 der Ausnehmung 4 des Halters 3 schließen sich über die Rückseite des Halters 3 vorragende Stützflächen 20,21 an, an welchen der Duoadapter 8 mit Wandteilen 22 oder der Trioadapter 8' mit seinen äußeren Führungswänden 15 sich abstützt.

Zusätzlich weist der Halter 3 benachbart zur Längsrandkante 11 der Ausnehmung 4 symmetrisch angeordnet zwei Rastausnehmungen 23 und an der anderen Längsrandkante 10 mittig gegenüber den Rastausnehmungen 23 eine Rastkante 23' auf. Sowohl der Duoadapter 8 als auch der Trioadapter 8' weisen jeweils zwei federnde Rastnasen 24 und eine Raste 25 auf, die in Montagesollposition in die Rastausnehmungen 23 einsetzbar beziehungsweise an der Rastkante 23' verrastbar sind.

Die frontseitigen Mündungen der Aufnahmebereiche des Adapters 8 beziehungsweise 8', die zum Einsetzen jeweils eines Datenanschlussmoduls 1 dienen, sind durch abbrechbare Blindkappen oder eine abbrechbare Blindwand 9 verschlossen.

Wie insbesondere aus Figur 4 ersichtlich, weist die Vorderseite des Duoadapters 8 eine der Form der kreisrunden Ausnehmung der Abdeckplatte 6 angepasste, aus der Vorderseite vorragende Wandung 26 auf, deren Dicke etwa der Dicke der Abdeckplatte 6 entspricht und die weitestgehend die Ausnehmung der Abdeckplatte ausfüllt.

Jeder Adapter 8, 8' weist an einer Längsrandkante seiner Aufnahmebereiche eine nach vorn vorragende, abgeschrägte Führungswand 27 auf, die als Führungshilfe beim Einschieben eines Datensteckers 1 dient.

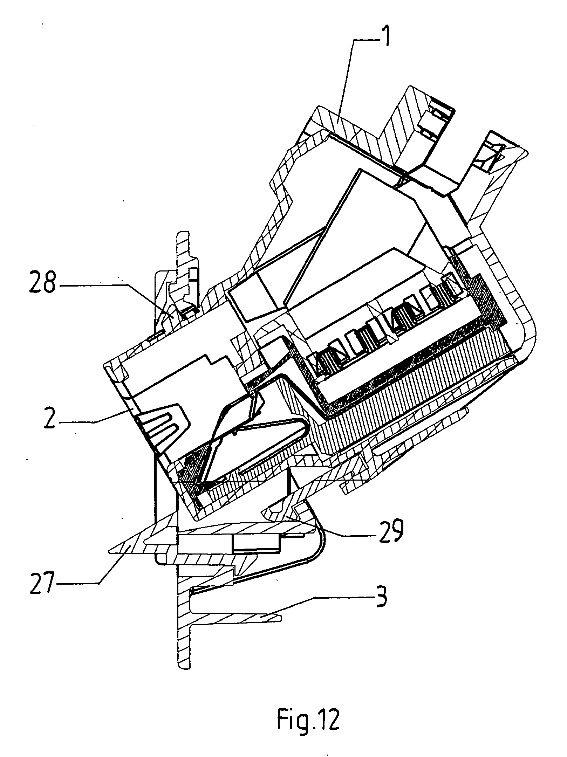

Wie insbesondere aus Figur 12 ersichtlich, weist jedes Datenanschlussmodul 1 hinter der Randkante der Ausnehmung 4 des Halters 3 verhakbare Hakenelemente 28 und verrastbare federnde Rastelemente 29 auf, wobei im Bereich der Verrastung des Rastelementes 29 ein Freiraum an der entsprechenden Fläche des Halters 3 ausgebildet ist, der es ermöglicht, mittels eines Schraubendrehers oder dergleichen auf das Rastelement 29 einzuwirken und dieses zu lösen. Mit einem Federkontakt oberhalb der Hakenelemente 28 wird eine metallische Verbindung zwischen dem Schirmgehäuse des Datenanschlussmoduls 1 und dem Halter 3 erzeugt, welches eine elektrische Masseverbindung darstellt.

Zur Montage kann alternativ in die Ausnehmung 4 des Halters 3 ein Duoadapter 8 eingesteckt werden und verrastet werden wobei nachfolgend eine handelsübliche Abdeckplatte 6 und ein handelsübliches Zentralstück 5 montiert werden können. Alternativ kann in den Halter 3 beziehungsweise in dessen Ausnehmung 4 ein Trioadapter 8' eingebracht werden. Es kann dann eine alternative Abdeckplatte 6' und ein alternatives Zentralstück 5' aufgesetzt und montiert werden, so dass eine funktionstüchtige Einheit zur Verfügung gestellt ist. In den Duoadapter 8 können wahlweise ein oder zwei Datenanschlussmodule 1 eingesteckt werden. In den Trioadapter 8' können wahlweise ein, zwei oder drei Datenanschlussmodule 1 eingesteckt und positioniert werden.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zur Installation von Datenanschlussmodulen (1), insbesondere Steckbuchsen, bestehend aus einem an einer Installationsdose, insbesondere Unterputzdose, befestigbaren Halter (3) mit einer zentralen Ausnehmung (4) zur Aufnahme von mindestens einem Datenanschlussmodul (1), einem Zentralstück (5) mit einer zentralen Öffnung, die mindestens den Steckbereich der Datenanschlussmodule (1) freigibt, sowie einer Abdeckplatte (6) mit einem zentralen Ausschnitt, der den Steckbereich der Datenanschlussmodule (1) und Teilbereiche des Halters (3) freigibt, wobei die Abdeckplatte (6) in Montagesolllage zwischen dem Halter (3) und dem Zentralstück (5) angeordnet und mittels des Zentralstücks (5) an dem Halter (3) lösbar fixiert ist, **dadurch gekennzeichnet, dass** die zentrale Ausnehmung (4) des Halters (3) als rechteckige Ausnehmung ausgebildet und so dimensioniert ist,
dass maximal drei im Querschnitt rechteckige Datenanschlussmodule (1) in der Ausnehmung (4) positionierbar sind, dass in die Ausnehmung (4) des Halters (3) ein Adapter (8,8') eingesetzt oder einsetzbar ist, der ebenso wie der Halter (3) Kupplungsmittel zur lösbaren Kupplung des Adapters (8.8') am Halter aufweist, der alternativ als Duoadapter zwei Aufnahmebereiche für zwei Datenanschlussmodule (1) aufweist, die zentrisch und mittensymmetrisch zur Ausnehmung (4) des Halters (3) ausgerichtet sind, oder als Trioadapter drei Aufnahmebereiche für drei Datenanschlussmodule (1) aufweist, die zentrisch und mittensymmetrisch zur Ausnehmung (4) des Halters (3) ausgerichtet sind,
dass alternativ bei Anordnung eines Duoadapters (8) mit Aufnahmebereichen für zwei Datenanschlussmodule (1) eine herkömmliche Abdeckplatte (6) mit einer kreisrunden Ausnehmung mit einem Durchmesser von etwa 45mm oder einer entsprechend bemessenen rechteckigen Ausnehmung sowie ein herkömmliches Zentralstück (5) mit einem den Steckbereichen der Datenanschlussmodule (1) angepassten Ausschnitt vorgesehen ist, oder bei Anordnung eines Trioadapters (8') mit Aufnahmebereichen für drei Datenanschlussmodule (1) ein Zentralstück (5') mit einer rechteckigen Ausnehmung, die die drei Aufnahmebereiche freigibt sowie eine Abdeckplatte (6') mit einem diesem Zentralstück (5') angepassten Ausschnitt vorgesehen ist.

2. Vorrichtung nach Anspruch 1, **dadurch gekennzeichnet, dass** die rechteckige Ausnehmung (4) des Halters (3) an beiden langen Längsrandkanten (10,11) jeweils gegenüberliegend sieben Führungsrinnen (12,13) aufweist, der Duoadapter (8) drei die Aufnahmebereiche seitlich begrenzende Führungswände (14) aufweist, die in drei ersten Führungsrinnen (13) des Halters (3) geführt sind, der Trioadapter (8') vier die Aufnahmebereiche seitlich begrenzende Führungswände (15) aufweist, die vier zweiten Führungsrinnen (12) des Halters (3) geführt sind.

3. Vorrichtung nach Anspruch 2, **dadurch gekennzeichnet, dass** an eine der Längsrandkanten (11) der Ausnehmung (4) des Halters (3) eine über dessen Rückseite vorragende Stützfläche (17) anschließt, die die Führungsrinnen (12,13) aufweist.

4. Vorrichtung nach einem der Ansprüche 2 oder 3, **dadurch gekennzeichnet, dass** an die schmalen Randkanten (18,19) der Ausnehmung (4) des Halters (3) über die Rückseite des Halters (3) vorragende Stützflächen (20,21) anschließen.

5. Vorrichtung nach einem der Ansprüche 1 bis 4, **dadurch gekennzeichnet, dass** der Halter (3) benachbart zu einer Längsrandkante (11) der Ausnehmung (4) zwei Rastausnehmungen (23) aufweist und eine der anderen Längsrandkante (10) benachbarte Kante des Halters (3) eine Rastkante (23') bildet, und dass der Duoadapter (8) und der Trioadapter (8') jeweils zwei Rastnasen (24) aufweist, die in die beiden Rastausnehmungen (23) einsetzbar und dort verrastbar sind, sowie jeweils eine Raste (25), die mit der Rastkante (23') verrastbar ist.

6. Vorrichtung nach einem der Ansprüche 1 bis 5, **dadurch gekennzeichnet, dass** die frontseitige Mündung der Aufnahmebereiche jedes Adapters (8,8') durch eine abbrechbare Blindkappe (9) oder Blindwand verschlossen ist.

7. Vorrichtung nach einem der Ansprüche 1 bis 6, **dadurch gekennzeichnet, dass** die Vorderseite des Duoadapters (8) eine der Form der kreisrunden Ausnehmung der Abdeckplatte (6) angepasste aus der Vorderseite vorragende Wandung (26) aufweist, deren Dicke etwa der Dicke der Abdeckplatte (6) entspricht.

8. Vorrichtung nach einem der Ansprüche 1 bis 7, **dadurch gekennzeichnet, dass** jeder Adapter (8,8') an einer Längsrandkante seiner Aufnahmebereiche eine nach vorn vorragende, abgeschrägte Führungswand (27) für die einzuschiebenden Datenstecker aufweist.

9. Vorrichtung nach einem der Ansprüche 1 bis 8, **dadurch gekennzeichnet, dass** jedes Datenanschlussmodul (1) hinter der Randkante der Ausnehmung (4) des Halters (3) verhakbare Hakenelemente (28) und verrastbare federnde Rastelemente (29) aufweist.
